(19) Europäisches Patentamt
European Patent Office
Office européen des brevets

(11) **EP 2 909 944 B1**

(12) **FASCICULE DE BREVET EUROPEEN**

(45) Date de publication et mention
de la délivrance du brevet:
**29.06.2016 Bulletin 2016/26**

(21) Numéro de dépôt: **13776464.3**

(22) Date de dépôt: **10.10.2013**

(51) Int Cl.:
**H04B 1/7163** *(2011.01)*    **H04B 1/69** *(2006.01)*
**H04B 1/7183** *(2011.01)*

(86) Numéro de dépôt international:
**PCT/EP2013/071126**

(87) Numéro de publication internationale:
**WO 2014/060277 (24.04.2014 Gazette 2014/17)**

(54) **RÉCEPTEUR UWB À CORRECTION DE DÉRIVE TEMPORELLE**

UWB EMPFÄNGER MIT ZEITVERSCHIEBUNGSKORREKTUR

UWB RECEIVER WITH TIME DRIFT CORRECTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.10.2012 FR 1259864**

(43) Date de publication de la demande:
**26.08.2015 Bulletin 2015/35**

(73) Titulaires:
• **Commissariat à l'Énergie Atomique
et aux Énergies Alternatives
75015 Paris (FR)**
• **Be Spoon
73370 Le Bourget du Lac (FR)**

(72) Inventeurs:
• **DEHMAS, François
F-38450 Vif (FR)**
• **MASSON, Gilles
F-38430 Saint-Jean de Moirans (FR)**
• **OUVRY, Laurent
F-38000 Grenoble (FR)**

(74) Mandataire: **Brevalex
95, rue d'Amsterdam
75378 Paris Cedex 8 (FR)**

(56) Documents cités:
**WO-A1-2008/063132**

• **LI HUANG ET AL: "Timing Tracking Algorithms
for Impulse Radio (IR) Based Ultra Wideband
(UWB) Systems", WIRELESS
COMMUNICATIONS, NETWORKING AND
MOBILE COMPUTING, 2007. WICOM 2007.
INTERNATIONAL CONFERENCE ON, IEEE,
PISCATAWAY, NJ, USA, 21 septembre 2007
(2007-09-21), pages 570-573, XP031261323, ISBN:
978-1-4244-1311-9**
• **CLAUDE DESSET ET AL: "UWB Search
Strategies for Minimal-Length Preamble and a
Low-Complexity Analog Receiver", SIGNAL
PROCESSING ADVANCES IN WIRELESS
COMMUNICATIONS, 2006. SPAWC '06. IEEE 7TH
WORKSHOP ON, IEEE, PISCATAWAY, NJ, USA,
1 juillet 2006 (2006-07-01), pages 1-5,
XP031077949, ISBN: 978-0-7803-9710-1**
• **YUANJIN ZHANG ET AL: "A new synchronization
algorithm for UWB impulse radio communication
systems", COMMUNICATIONS SYSTEMS, 2004.
ICCS 2004. THE NINTH INTERNATIONAL CONFE
RENCE ON SINGAPORE, CHINA 6-8 SEPT. 2004,
PISCATAWAY, NJ, USA, IEEE, 6 septembre 2004
(2004-09-06), pages 25-29, XP010743276, DOI:
10.1109/ICCS.2004.1359332 ISBN:
978-0-7803-8549-8**

EP 2 909 944 B1

**Description**

**DOMAINE TECHNIQUE**

La présente invention concerne le domaine des récepteurs UWB (*Ultra Wide Band*) et plus particulièrement la synchronisation de tels récepteurs.

**ÉTAT DE LA TECHNIQUE ANTÉRIEURE**

Les systèmes de télécommunication ultra-large bande ou UWB de type impulsionnel sont bien connus de l'état de la technique. Dans un tel système, un symbole émis par un émetteur est transmis à l'aide d'une séquence d'impulsions ultra-courtes, de l'ordre de la nanoseconde ou de la centaine de picosecondes.

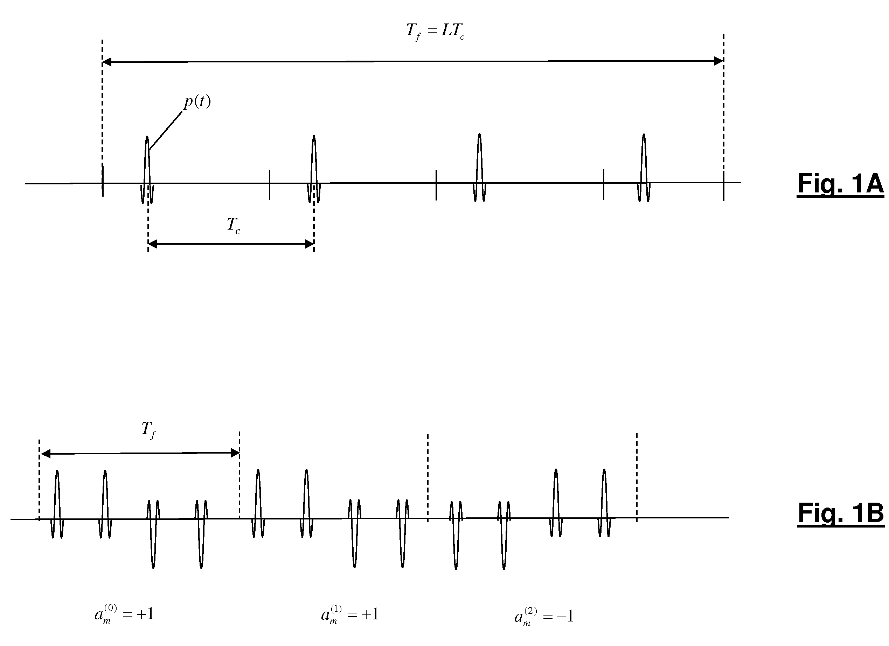

La Figure 1A illustre schématiquement le signal émis par un émetteur UWB, correspondant à un symbole d'information donné. Ce signal est constitué d'impulsions se répétant avec une période de répétition $T_c$.

Le signal émis par l'émetteur, en absence de modulation par des symboles de modulation, peut s'exprimer sous la forme suivante :

$$s_{Tx}(t) = \sum_{k=0}^{L-1} p(t - kT_c) \cos\left(2\pi f_0 \left(t - kT_c\right) + \varphi_0\right) \qquad (1)$$

où $p(t)$ est la forme de l'impulsion élémentaire en bande de base, $f_0$ est la fréquence porteuse, $\varphi_0$, la phase à l'origine, et $T_c$ est la période de répétition. La durée $\tau$ de l'impulsion élémentaire $p(t)$ est sensiblement inférieure à la durée de la période $T_c$.

Ce signal de base peut être modulé en amplitude et/ou en position pour transmettre un symbole par période symbole, chaque période symbole constituée par un nombre donné de périodes de répétition. La période symbole est de durée $T_f = LT_c$ où $L$ est un entier. Par exemple si la modulation est une modulation de position (PPM pour *Pulse Position Modulation*), le signal modulé peut s'exprimer sous la forme :

$$s_{Tx}(t) = \sum_{k=0}^{L-1} p(t - kT_c - m\varepsilon) \cos\left(2\pi f_0 \left(t - kT_c - m\varepsilon\right) + \varphi_0\right) \qquad (2)$$

où $\varepsilon$ est un retard de modulation sensiblement inférieur à la période $T_c$ et $m = 0,..,M-1$ est la position $M$-aire PPM du symbole.

De manière similaire, un symbole peut être transmis par l'émetteur UWB au moyen d'une modulation d'amplitude ou en phase auquel le signal modulé peut s'exprimer alors sous la forme :

$$s_{Tx}(t) = \sum_{k=0}^{L-1} a_m \, p(t - kT_c) \cos\left(2\pi f_0 \left(t - kT_c\right) + \varphi_0\right) \qquad (3)$$

où $a_m$ est le symbole à transmettre, par exemple un symbole PAM (*Pulse Amplitude Modulation*) ou (D)BPSK ((*Differential*) *Binary Phase Shift Keying*).

Pour séparer les transmissions de différents émetteurs, on peut prévoir que chaque émetteur est associé à un code $c_k$, $k = 0, ..., L$-1, donné, étant entendu que les codes relatifs à différents émetteurs sont orthogonaux. Dans ce cas les signaux émis en modulation de position et en position d'amplitude deviennent respectivement, pour le même symbole à transmettre :

$$s_{Tx}(t) = \sum_{k=0}^{L-1} c_k \, p(t - kT_c - m\varepsilon) \cos\left(2\pi f_0 \left(t - kT_c - m\varepsilon\right) + \varphi_0\right) \qquad (4)$$

et

$$s_{Tx}(t) = a_m \sum_{k=0}^{L-1} c_k p(t - kT_c) \cos\left(2\pi f_0 \left(t - kT_c\right) + \varphi_0\right) \tag{5}$$

Enfin, pour une série de symboles successifs $i = 0,..., N,$ le signal émis peut s'écrire :

$$s_{Tx}(t) = \sum_{i=0}^{N-1} \sum_{k=0}^{L-1} c_k p\left(t - \left(k + iL\right)T_c - m^{(i)}\varepsilon\right) \cos\left(2\pi f_0 \left(t - \left(k + iL\right)T_c - m^{(i)}\varepsilon\right) + \varphi_0\right) \tag{6}$$

et

$$s_{Tx}(t) = \sum_{i=0}^{N-1} a_m^{(i)} \sum_{k=0}^{L-1} c_k p\left(t - \left(k + iL\right)T_c\right) \cos\left(2\pi f_0 \left(t - \left(k + iL\right)T_c\right) + \varphi_0\right) \tag{7}$$

où $m^{(i)}$ et $a_m^{(i)}$ , $i = 0,..., N - 1$ sont respectivement les symboles PPM et PAM.

La Fig. 1B illustre un exemple de signal impulsionnel UWB, utilisant une modulation BPSK. Le code de l'émetteur est ici $c_0 = + 1, c_1 = +1$, $c_2 = -1$, $c_3 = -1$ et les symboles successivement transmis sont $a_m^{(0)} = +1; a_m^{(1)} = +1; a_m^{(2)} = -1$ .

Quel que soit le type de modulation, le récepteur doit se caler en fréquence et en temps sur le signal reçu. Plus précisément, le récepteur opère une translation en bande de base à l'aide d'une fréquence $f_1$ qui peut être légèrement différente de la fréquence porteuse $f_0$. Il doit ensuite synchroniser des fenêtres temporelles d'intégration du récepteur sur les positions temporelles des impulsions du signal translaté en bande de base. Les fenêtres temporelles sont espacées d'une période de répétition $T_1$ qui peut légèrement différer de la période de répétition des impulsions, $T_c$. Nous désignerons dans la suite par offset de fréquence du récepteur l'écart $\delta f = f_1 - f_0$ et par offset temporel du récepteur l'écart $\delta T = T_1 - T_c$. La synchronisation du récepteur sur le signal reçu est particulièrement difficile à atteindre eu égard à la très faible durée de l'impulsion de base.

L'asservissement de la fréquence du récepteur est généralement obtenu grâce à une boucle à verrouillage de phase ou PLL (*Phase Locked Loop*) et celui de la position des fenêtres temporelles grâce à une boucle à verrouillage de retard ou DLL (*Delay Locked Loop*). La demande US2010/0142596 décrit notamment une boucle à verrouillage de retard pour un récepteur UWB. Cette boucle DLL utilise trois corrélateurs en parallèle, corrélant respectivement le signal reçu avec une séquence de code, en avance, synchrone et en retard par rapport au signal reçu. Les puissances en sortie des différents corrélateurs permettent à la boucle de se caler temporellement par rapport au signal reçu. Toutefois, un tel asservissement temporel est complexe car il requiert dans le cas décrit, d'une part, un filtrage adapté au symbole, qui doit être effectué en analogique et, d'autre part, trois voies distinctes de traitement du signal reçu. En outre, un tel système fonctionne mal lorsque le canal de transmission est multi-trajet, la réalisation d'un RAKE en analogique étant très délicate.

Le but de la présente invention est de proposer un récepteur UWB qui permette une synchronisation simple et robuste sur le signal reçu.

## EXPOSÉ DE L'INVENTION

La présente invention est définie par un récepteur destiné à recevoir un signal UWB impulsionnel transmettant des symboles avec une première période ($T_c, LT_c$), modulé par une fréquence porteuse ($f_0$), ledit récepteur comprenant :

- un mélangeur en quadrature pour translater en bande de base ledit signal UWB impulsionnel, à partir du signal d'un oscillateur local de fréquence ($f_1$) égale, à un offset fréquentiel près, à ladite fréquence porteuse ;
- un étage d'intégration du signal ainsi translaté en bande de base, pendant des fenêtres temporelles successives se répétant avec une seconde période ($T_w$), la première période étant égale, à un offset temporel près, à un multiple *(q,Lq)* de la seconde période ;
- un étage d'échantillonnage pour échantillonner le signal ainsi intégré, un échantillon représentant le résultat d'intégration du signal translaté sur la seconde période ;
- un estimateur de phase pour estimer le déphasage entre deux échantillons du signal intégré, séparés par ledit multiple de la seconde période ;

L'article de Li Huang et al. intitulé « Timing tracking algorithms for impulse radio (IR) based ultra-wideband (UWB) systems » publié dans Proc. of WICOM 2007, Sept. 2007, pages 570-573 décrit l'architecture d'un récepteur UWB impulsionnel comprenant un mélangeur en quadrature pour translater en bande de base le signal UWB impulsionnel, un étage d'intégration pour intégrer le signal ainsi translaté en bande de base sur une fenêtre d'intégration, un étage d'échantillonnage du résultat d'intégration et un contrôleur pour contrôler la position de la fenêtre d'intégration.

- des moyens de contrôle appliquant un décalage temporel aux fenêtres temporelles de l'étage d'intégration en fonction du décalage de phase précédemment estimé.

Avantageusement, ledit récepteur comprend en amont du mélangeur en quadrature un filtre RF suivi d'un amplificateur bas bruit.

Le mélangeur en quadrature peut être suivi d'un étage de filtrage passe-bas en amont de l'étage d'intégration.

Selon un premier mode de réalisation, le signal impulsionnel comprend une impulsion se répétant avec la première période $T_c$ et les fenêtres d'intégration se répètent avec une seconde période $T_w$, sensiblement inférieure à $T_c$, l'estimateur de phase estimant ledit déphasage, $\Delta\phi$, entre deux échantillons du signal intégré, séparés par un intervalle de temps $T_1 = qT_w$, où $q$ est un nombre entier, l'écart $T_1 - T_c$ définissant ledit offset temporel.

Selon une première variante, les moyens de contrôle appliquent aux fenêtres d'intégration un décalage temporel $-\delta t = (\Delta\phi/2\pi Q)T_1$ où $Q$ est un nombre entier égal au produit de l'intervalle de temps $T_1$ par la fréquence ($f_1$) de l'oscillateur local, le décalage temporel étant appliqué avec une périodicité $T_1$.

Selon une seconde variante, les moyens de contrôle accumulent les déphasages fournis par ledit estimateur de phase pour une pluralité $n_T$ des dits intervalles de temps, successifs, pour obtenir un déphasage cumulé $\Delta\Phi$, et appliquent aux fenêtres d'intégration un décalage temporel $-\Delta t = (\Delta\Phi/2\pi Q)T_1$ où $Q$ est un nombre entier égal au produit de l'intervalle de temps $T_1$ par la fréquence ($f1$) de l'oscillateur local, le décalage temporel étant appliqué avec une périodicité $n_TT_1$.

Selon une troisième variante, les moyens de contrôle accumulent les déphasages fournis par ledit estimateur de phase pour une pluralité des dits intervalles de temps, successifs, pour obtenir un déphasage cumulé $\Delta\Phi$, jusqu'à ce que le décalage temporel $-\Delta t = (\Delta\Phi/2\pi Q)T_1$ corresponde à une valeur égale à ladite seconde période, où $Q$ est un nombre entier égal au produit de l'intervalle de temps $T_1$ par la fréquence ($f_1$) de l'oscillateur local, un décalage temporel de cette seconde période étant alors appliqué lorsque cette valeur est atteinte.

Selon un second mode de réalisation, le signal impulsionnel comprend une série de $L$ impulsions séparées d'une période $T_c$, ladite série se répétant avec la première période $LT_c$, chaque série d'impulsions étant codée à l'aide d'une séquence de codage ($c_k$) et modulée par un symbole de modulation $\{a_m^{(i)}\}$, et les fenêtres d'intégration se répètent avec une seconde période $T_w$, sensiblement inférieure à $T_c$, l'estimateur de phase estimant ledit déphasage, $\Delta\phi$, entre deux échantillons du signal intégré, séparés par un intervalle de temps $T_1 = qLT_w$, où $q$ est un nombre entier, l'écart $L(T_1 - T_c)$ définissant ledit offset temporel.

Selon une première variante, les moyens de contrôle appliquent aux fenêtres d'intégration un décalage temporel $-\delta t = (\Delta\phi/2\pi Q)LT_1$ où $Q$ est un nombre entier égal au produit de l'intervalle de temps $T_1$ par la fréquence ($f_1$) de l'oscillateur local, le décalage temporel étant appliqué avec une périodicité $LT_1$.

Selon une seconde variante, les moyens de contrôle accumulent les déphasages fournis par ledit estimateur de phase pour une pluralité $n_T$ des dits intervalles de temps, successifs, pour obtenir un déphasage cumulé $\Delta\Phi$, et appliquent aux fenêtres d'intégration un décalage temporel $-\Delta t = (\Delta\Phi/2\pi Q)LT_1$ où $Q$ est un nombre entier égal au produit de l'intervalle de temps $T_1$ par la fréquence ($f_1$) de l'oscillateur local, le décalage temporel étant appliqué avec une périodicité $n_TLT_1$.

Selon une troisième variante, les moyens de contrôle accumulent les déphasages fournis par ledit estimateur de phase pour une pluralité des dits intervalles de temps, successifs, pour obtenir un déphasage cumulé $\Delta\Phi$, jusqu'à ce que le décalage temporel $-\Delta t = (\Delta\Phi/2\pi Q)LT_1$ corresponde à une valeur égale à ladite seconde période, où $Q$ est un nombre entier égal au produit de l'intervalle de temps $T_1$, par la fréquence ($f_1$) de l'oscillateur local, un décalage temporel de cette seconde période étant alors appliqué lorsque cette valeur est atteinte.

La présente invention est également définie par une méthode de réception d'un signal UWB impulsionnel transmettant des symboles avec une première période ($T_c, LT_c$), modulé par une fréquence porteuse ($f_0$), ladite méthode comportant les étapes suivantes :

- un mélange en quadrature pour translater en bande de base ledit signal UWB impulsionnel, à partir du signal d'un oscillateur local de fréquence ($f_1$) égale, à un offset fréquentiel près, à ladite fréquence porteuse ;
- une intégration du signal ainsi translaté en bande de base, pendant des fenêtres temporelles successives se répétant avec une seconde période ($T_w$), la première période étant égale, à un offset temporel près, à un multiple ($q, Lq$) de la seconde période ;
- un échantillonnage du signal ainsi intégré, un échantillon représentant le résultat d'intégration du signal translaté sur la seconde période ;
- une estimation de phase pour estimer le déphasage entre deux échantillons du signal intégré, séparés par ledit multiple de la seconde période ;
- une étape d'application d'un décalage temporel aux fenêtres temporelles de l'étage d'intégration en fonction du décalage de phase précédemment estimé.

Selon un premier mode de réalisation, le signal impulsionnel comprend une impulsion se répétant avec la première période $T_c$ et les fenêtres d'intégration se répètent avec une seconde période $T_w$, sensiblement inférieure à $T_c$, l'estimation de phase estimant ledit déphasage, $\Delta\phi$, entre deux échantillons du signal intégré, séparés par un intervalle de temps $T_1 = qT_w$, où $q$ est un nombre entier, l'écart $T_1 - T_c$ définissant ledit offset temporel.

Selon une première variante, le décalage temporel est obtenu par $-\delta t = (\Delta\phi/2\pi Q)T_1$ où $Q$ est un nombre entier égal au produit de l'intervalle de temps $T_1$ par la fréquence $(f_1)$ de l'oscillateur local, le décalage temporel étant appliqué avec une périodicité $T_1$.

Selon une seconde variante, on accumule, pour une pluralité $n_T$ des dits intervalles de temps successifs, les déphasages fournis par ladite estimation de phase, pour obtenir un déphasage cumulé $\Delta\Phi$, et l'on applique aux fenêtres d'intégration un décalage temporel $-\Delta t = (\Delta\Phi/2\pi Q)T_1$ où $Q$ est un nombre entier égal au produit de l'intervalle de temps $T_1$ par la fréquence $(f_1)$ de l'oscillateur local, le décalage temporel étant appliqué avec une périodicité $n_T T_1$.

Selon une troisième variante, on accumule, pour une pluralité des dits intervalles de temps successifs, les déphasages fournis par ladite estimation de phase, pour obtenir un déphasage cumulé $\Delta\Phi$, jusqu'à ce que le décalage temporel $-\Delta t = (\Delta\Phi/2\pi Q)T_1$ corresponde à une valeur égale à ladite seconde période, où $Q$ est un nombre entier égal au produit de l'intervalle de temps $T_1$ par la fréquence $(f_1)$ de l'oscillateur local, un décalage temporel de cette seconde période étant alors appliqué lorsque cette valeur est atteinte.

Selon un second mode de réalisation, le signal impulsionnel comprend une série de $L$ impulsions séparées d'une période $T_c$, ladite série se répétant avec la première période $LT_c$, chaque série d'impulsions étant codée à l'aide d'une séquence de codage $(c_k)$ et modulée par un symbole de modulation $\left(a_m^{(i)}\right)$, les fenêtres d'intégration se répétant avec une seconde période $T_w$, sensiblement inférieure à $T_c$, l'estimation de phase estimant ledit déphasage, $\Delta\phi$, entre deux échantillons du signal intégré, séparés par un intervalle de temps $T_1 = qLT_w$, où $q$ est un nombre entier, l'écart $L(T_1 - T_c)$ définissant ledit offset temporel.

On peut alors appliquer aux fenêtres d'intégration un décalage temporel $-\delta t = (\Delta\phi/2\pi Q)LT_1$ où $Q$ est un nombre entier égal au produit de l'intervalle de temps $T_1$, par la fréquence $(f_1)$ de l'oscillateur local, le décalage temporel étant appliqué avec une périodicité $LT_1$.

BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Figure 1A, déjà décrite, représente un exemple de signal UWB de type impulsionnel ;
La Figure 1B, déjà décrite, représente un exemple de signal UWB de type impulsionnel modulé ;
La Figure 2A représente de manière schématique la structure d'un récepteur UWB selon un premier mode de réalisation de l'invention ;
La Figure 2B représente de manière schématique la structure d'un récepteur UWB selon un second mode de réalisation de l'invention.

EXPOSÉ DÉTAILLÉ DE MODES DE RÉALISATION PARTICULIERS

Nous considérerons dans la suite un récepteur UWB et plus précisément un récepteur destiné à recevoir un signal UWB de type impulsionnel.

Dans un souci de simplification de la présentation et sans perte de généralité, nous considérerons dans un premier temps que le signal UWB impulsionnel est non modulé. Ce signal se présente en bande de base comme une séquence périodique d'impulsions ultra-courtes (de l'ordre d'une fraction de nanoseconde à quelques nanosecondes), séparées par une période de répétition $T_c$. Nous supposerons, dans le cas général, que le signal en bande de base est ensuite translaté en fréquence par modulation d'une porteuse à la fréquence $f_0$. Aucune relation particulière n'est supposée entre la période de répétition et la fréquence de la porteuse. Le signal transmis par l'émetteur est alors donné par l'expression (1).

Nous supposerons que le canal de transmission est multi-trajet, autrement dit que sa réponse impulsionnelle peut s'exprimer sous la forme :

$$h(t) = \sum_{p=0}^{P-1} h_p \delta(t - t_p) \tag{8}$$

où P est le nombre de trajets du canal, et $h_p$, $t_p$ sont respectivement le coefficient d'atténuation et le retard du trajet $p$, $\delta(.)$ est le symbole de Dirac.

Le signal reçu par le récepteur, noté $s_{Rx}$, peut alors s'exprimer sous la forme :

$$s_{Rx}(t) = \sum_{k=0}^{L-1} \sum_{p=0}^{P-1} h_p p(t - t_p - kT_c) \cos\left(2\pi f_0 (t - t_p - kT_c) + \varphi_0\right) + n(t) \tag{9}$$

où $n(t)$ est le bruit au niveau du récepteur.

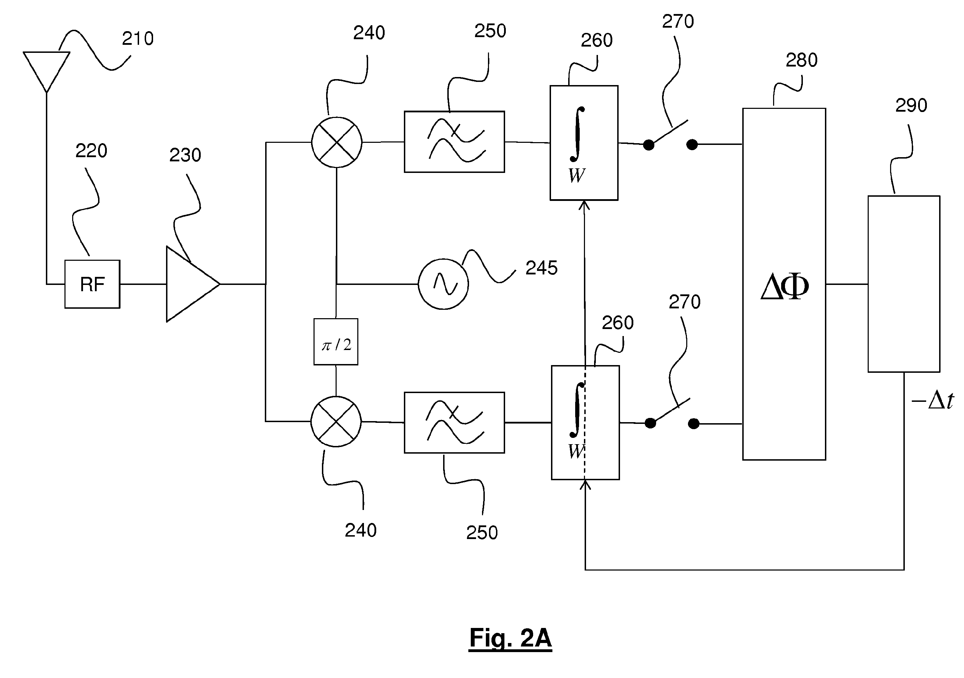

La Fig. 2A illustre de manière schématique la structure d'un récepteur UWB selon un mode de réalisation de l'invention.

Le signal $s_{Rx}$ reçu par l'antenne 210 est filtré par un filtre RF 220 puis amplifié par un amplificateur bas bruit (LNA), 230, avant d'être translaté en bande de base au moyen d'un mélangeur quadrature, 240.

Le mélangeur utilise une fréquence $f_1$ fournie par l'oscillateur local 245, idéalement égale à $f_0$ mais en pratique décalée d'un offset, dû à la dérive de l'oscillateur. Les signaux en phase et en quadrature de phase sont ensuite filtrés à l'aide de filtres passe-bas (ou passe-bande) 250 puis intégrés, par un étage d'intégration 260, sur des fenêtres temporelles successives de largeur $T_w$. Les fenêtres temporelles se succèdent avec une périodicité $T_w$. Après intégration, les signaux en phase et en quadrature, sont échantillonnés à la fréquence $1/T_w$ par l'étage d'échantillonnage 270. Selon une variante non illustrée, les fenêtres temporelles se succèdent avec une périodicité $T_w/K$ (on prévoit alors K intégrateurs en parallèle sur chacune des voies $I$ et $Q$, chaque sortie d'intégrateur étant échantillonnée à tour de rôle), ce qui se traduit par un taux de chevauchement de $(K-1)/K$ entre fenêtres successives. Sans perte de généralité, on supposera dans la suite que les fenêtres sont sans chevauchement ($K$=1). En pratique, le signal UWB étant presque partout nul, on pourra se contenter d'échantillonner les signaux en phase et en quadrature dans des intervalles temporels centrés sur les positions temporelles des impulsions.

Le détecteur de phase 280 reçoit les échantillons successifs complexes obtenus (sur les voies I et Q) et on en déduit le décalage de phase entre deux échantillons séparés de $q$ périodes d'échantillonnage, où $qT_w \simeq T_c$.

Le récepteur comprend en outre des moyens de contrôle 290 recevant le déphasage fourni par le détecteur 280 et contrôlant la position de la fenêtre d'intégration ainsi que l'instant d'échantillonnage. Les moyens de contrôle 290 opèrent comme une boucle à verrouillage de retard (DLL) en retardant plus ou moins le début de la fenêtre d'intégration par rapport au signal reçu et, corrélativement, l'instant d'échantillonnage.

Le fonctionnement des moyens de contrôle est explicité ci-après.

Après mélange en quadrature et filtrage passe-bande, le signal complexe, avant intégration en 260, est donné par :

$$r(t) = \sum_{k=0}^{L-1} \sum_{p=0}^{P-1} h_p p(t - t_p - kT_c) \exp\left(j2\pi(f_0 - f_1)t - j2\pi f_0(t_p + kT_c) + j(\varphi_0 - \varphi_1)\right) + n_1(t)$$

$$= \sum_{k=0}^{L-1} p_r(t - kT_c) \exp\left(j2\pi(f_0 - f_1)t - j2\pi f_0 kT_c + j(\varphi_0 - \varphi_1)\right) + n_1(t) \tag{10}$$

où $n_1(t)$ est le bruit mélangé et filtré, $\varphi_1$ est la phase de l'oscillateur local, et en posant :

$$p_r(t) = \sum_{p=0}^{P-1} h_p p(t - t_p) \exp\left(-j2\pi f_0 t_p\right) \tag{11}$$

Le signal $r(t)$ est intégré pendant des fenêtres d'intégration successives de durée $T_w$. Autrement dit, le temps est découpé en fenêtres successives $W_n=[t_0+nT_w,t_0+(n+1)T_w]$ où $t_0$ est un instant donnant le point de départ de l'intégration. On comprendra qu'une variation de $t_0$ décale les fenêtres d'intégration par rapport au signal reçu.

Le signal complexe après intégration dans la fenêtre $W_n$ est noté $r_w[n]$ où $r_w\left[n\right]=\displaystyle\int_{t_0+nT_w}^{t_0+(n+1)T_w}r\left(t\right)dt$. Si l'on suppose que le support de $p_r(t)$ est inférieur à $T_c$, autrement dit qu'il n'y a pas d'interférence inter-impulsion due aux trajets multiples (dans le cas contraire, l'interférence peut être considérée comme une composante du bruit), la valeur $r_w[n]$ se réduit à :

$$r_w\left[n\right]=\int_{t_0+nT_w}^{t_0+(n+1)T_w}\left(p_r\left(t-k_nT_c\right)\times\exp\left(j2\pi\left(f_0-f_1\right)t-j2\pi f_0k_nT_c+j\left(\varphi_0-\varphi_1\right)\right)+n_1\left(t\right)\right)dt$$

$$(12)$$

où $k_n$ est l'entier tel que $p_r(t-k_nT_c)$ n'est pas partout nulle sur la fenêtre d'intégration $W_n$ (il existe au moins un entier $k_n$ vérifiant cette propriété sur la période de répétition des impulsions). Dans la mesure où la période de répétition des impulsions, $T_c$, est de l'ordre d'un multiple de la durée de la fenêtre d'intégration ($T_c \simeq qT_w$), l'entier $k_n$ vérifiant la condition précédente est unique.

La synchronisation du récepteur nécessite de connaître l'entier $q$ tel que $T_1=qT_w$ approche au mieux la période des impulsions, $T_c$. Si l'on a $T_1\simeq T_c$, la configuration de recouvrement de la fonction $p_r(t)$ avec les fenêtres d'intégration se répète au bout de $q$ fenêtres, autrement dit $k_{n+q} = k_n + 1$ et :

$$r_w\left[n+q\right]=\int_{t_0+nT_w}^{t_0+(n+1)T_w}\left(p_r\left(t+T_1-\left(k_n+1\right)T_c\right)\times\exp\left(j2\pi\left(f_0-f_1\right)\left(t+T_1\right)-j2\pi f_0\left(k_n+1\right)T_c+j\left(\varphi_0-\varphi_1\right)\right)\right)dt$$

$$(13)$$

où l'on a omis le terme de bruit.

La valeur $r_w[n+q]$ peut s'écrire de manière équivalente sous la forme :

$$r_w\left[n+q\right]=\int_{t_0+nT_w+T_1-T_c}^{t_0+(n+1)T_w+T_1-T_c}\left(p_r\left(t-k_nT_c\right)\times\exp\left(j2\pi\left(f_0-f_1\right)\left(t+T_c\right)-j2\pi f_0\left(k_n+1\right)T_c+j\left(\varphi_0-\varphi_1\right)\right)\right)dt$$

$$(14)$$

On suppose que $T_1 \simeq T_c$, et plus précisément que $|T_1 - T_c| \ll T_w$, d'où :

$$r_w\left[n+q\right]\simeq\int_{t_0+nT_w}^{t_0+(n+1)T_w}\left(p_r\left(t-k_nT_c\right)\times\exp\left(j2\pi\left(f_0-f_1\right)\left(t+T_c\right)-j2\pi f_0\left(k_n+1\right)T_c+j\left(\varphi_0-\varphi_1\right)\right)\right)dt$$

$$(15)$$

l'égalité étant exacte si $T_1 = T_c$ ou bien si le signal reçu est nul aux bords de la fenêtre d'intégration. Finalement, on a :

$$r_w\left[n+q\right]\simeq r_w\left[n\right]\exp\left(-j2\pi f_1T_c\right)$$

$$(16)$$

La relation (16) exprime le déphasage entre deux résultats d'intégration séparés de $q$ fenêtres d'intégration. Les résultats d'intégration sont obtenus en sortie des échantillonneurs 270 et le détecteur 280 détermine le déphasage entre échantillons séparés de $q$ périodes d'échantillonnage $T_w$ :

$$\Delta\phi = \arg\left(r_w[n+q]\,r_w^*[n]\right) = -2\pi f_1 T_c \tag{17}$$

Si l'on note $\delta = \dfrac{T_1 - T_c}{T_1}$ l'écart relatif entre la période des impulsions, $T_c$, émises par l'émetteur et la période, $T_1$, utilisée par le récepteur et tenant compte du fait que $f_1 T_1$ est généralement un nombre entier $Q$ (la période $T_1$ est obtenue par division de fréquence d'une horloge à la fréquence $f_1$), le déphasage $\Delta\phi$ peut s'exprimer en fonction de l'écart relatif précité modulo $2\pi$:

$$\Delta\phi = -2\pi Q\delta \quad [2\pi] \tag{18}$$

On comprendra que le déphasage $\Delta\phi$ traduit un glissement temporel $(-\Delta\phi/2\pi Q)T_1$ des fenêtres d'intégration par rapport au signal reçu, ledit glissement temporel étant déterminé ici par le détecteur avec une périodicité $T_1$. Le glissement temporel pourra être déterminé de manière univoque, sans repliement, si $|\Delta\phi| < \pi$ c'est-à-dire $|\delta| < \dfrac{1}{2Q}$.

La synchronisation du récepteur consiste à corriger ce glissement temporel. A cette fin, les moyens de contrôle, 290, font varier le début des fenêtres d'intégration en fonction du déphasage déterminé par le détecteur 280. Si le glissement temporel est de $\delta t = (-\Delta\phi/2\pi Q)T_1$ le début des fenêtres d'intégration sera décalé de $-\delta t = (\Delta\phi/2\pi Q)T_1$. On notera que la correction du glissement temporel par les moyens de contrôle est effectuée ici avec une périodicité $T_1$. Le cas échéant, le début des fenêtres d'intégration pourra être avancé ou retardé par multiple d'un pas temporel $\delta T_w$, l'instant d'échantillonnage étant donc avancé ou retardé d'autant.

Avantageusement, les moyens de contrôle, 290, effectuent une accumulation des déphasages $\Delta\phi$ obtenus sur une pluralité $n_T$ de périodes $T_1$ successives:

$$\Delta\Phi = \sum_{n=0}^{n_T - 1} \Delta\phi_n \tag{19}$$

Le décalage temporel cumulé (par effet de vernier) sur $n_T$ périodes successives peut être déterminé comme précédemment par :

$$\Delta t = \left(-\Delta\Phi/2\pi Q\right)T_1 \tag{20}$$

Avec une périodicité $n_T T_1$, les moyens de contrôle 180 calculent le glissement temporel cumulé et décalent le début des fenêtres d'intégration et les instants d'échantillonnage d'un temps $-\Delta t = (\Delta\Phi/2\pi Q)T_1$.

Alternativement, le glissement temporel pourra être cumulé jusqu'à ce qu'il atteigne une période d'échantillonnage $T_w$, les fenêtres étant alors décalées de cette période.

On notera que la correction du glissement temporel est réalisée par les moyens de contrôle 290. Si le décalage est réalisé par pas multiple d'un pas temporel $\delta T_w$, la correction à appliquer est de $\left\lfloor \dfrac{\Delta t}{\delta T_w} \right\rfloor$ pas temporels où $\lfloor x \rfloor$ désigne la valeur entière de $x$.

On comprend que le récepteur peut ainsi constamment corriger sa dérive temporelle par rapport au signal reçu. Les échantillons fournis par l'étage d'échantillonnage 270 sont alors synchrones avec les impulsions du signal reçu et peuvent être traités par le récepteur.

Nous avons supposé dans le premier mode de réalisation que le signal transmis par l'émetteur était non modulé (expression (1)).

On suppose désormais, dans un second mode de réalisation, que le signal transmis est modulé, par exemple par des symboles appartenant à une modulation BPSK ou DBPSK (expression (7)):

$$s_{Tx}(t) = \sum_{i=0}^{N-1} a_m^{(i)} \sum_{k=0}^{L-1} c_k p\left(t - \left(k + iN_c\right)T_c\right) \cos\left(2\pi f_0\left(t - \left(k + iN_c\right)T_c\right) + \varphi_0\right) \tag{21}$$

où l'on rappelle que les $a_m^{(i)}$, $i = 0,..,N\text{-}1$ sont les symboles de modulation et $c_k = 0,...,L\text{-}1$ est le code utilisé par l'émetteur. Ce code peut faire partie d'une famille de codes orthogonaux permettant la séparation par le récepteur des signaux transmis par différents émetteurs, de manière connue en soi.

A la différence du premier mode de réalisation, la période élémentaire à considérer pour l'estimation et la correction du décalage temporel avec le signal reçu n'est plus la période de répétition $T_c$ mais la période symbole $LT_c$, un symbole étant ici transmis sur $L$ périodes de répétition.

$$r(t) = \sum_{i=0}^{N-1} \rho\left(t - kLT_c\right)\exp\left(j2\pi\left(f_0 - f_1\right)t - j2\pi f_0 kLT_c + j\left(\varphi_0 - \varphi_1\right)\right) + n_1(t) \tag{22}$$

où l'on a posé

$$\rho(t) = \sum_{k=0}^{L-1} c_k p_r\left(t - kT_c\right)\exp\left(-j2\pi f_0 kT_c\right) \tag{23}$$

On comprendra que le premier mode de réalisation peut être considéré comme un cas particulier du second mode de réalisation, avec une impulsion par période symbole.

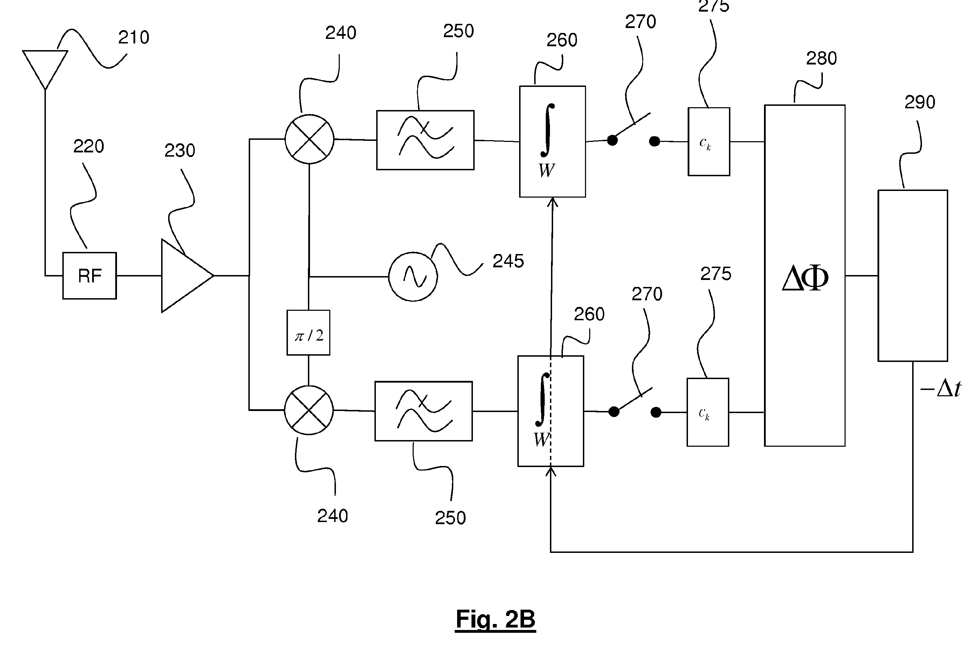

La Fig. 2B illustre de manière schématique la structure d'un récepteur UWB selon un second mode de réalisation de l'invention. Les éléments portant les mêmes références que la Fig. 2A sont identiques à ceux déjà décrits.

A la différence du récepteur de la Fig. 2A, le récepteur comprend un étage de corrélation 275 avec le code utilisé par l'émetteur. Cet étage, qui comprend des corrélateurs identiques sur les voies I et Q, peut être réalisé sous forme numérique, après l'échantillonnage, ou bien sous forme analogique, en aval de celui-ci. Ce second mode de réalisation suppose que l'on ait effectué une synchronisation initiale avec le code de l'émetteur.

En tout état de cause, si l'on note encore $r_w[n]$ le $n^{\text{ième}}$ échantillon en entrée du détecteur de déphasage 280, on a la relation:

$$r_w\left[n + q\right] = a_m^{(i+1)} \cdot a_m^{(i)} \times r_w\left[n\right] \times \exp\left(-j2\pi f_1 LT_c\right) \tag{24}$$

avec les mêmes conventions de notation que précédemment et où $a_m^{(i)}$ et $a_m^{(i+1)}$ sont deux symboles de modulation successifs. On notera que la période à laquelle sont fournis les échantillons au détecteur de déphasage est ici de $LT_1$ pour tenir compte de la corrélation avec le code de l'émetteur.

On suppose que les symboles de modulation $a_m^{(i)}$ sont des symboles BPSK ou DBPSK et donc que $a_m^{(i)} = \pm 1$. Il en résulte que $a_m^{(i+1)} \cdot a_m^{(i)} = \pm 1$ et que le déphasage peut être estimé modulo $\pi$:

$$\Delta\phi = -2\pi QL\delta \quad \left[\pi\right] \tag{25}$$

On comprendra que si un alphabet de modulation d'ordre supérieur est utilisé, par exemple un alphabet de modulation 4-PSK, le déphasage sera estimé modulo une fraction de $\pi$.

Selon une première variante, les moyens de contrôle, corrige le début des fenêtres d'intégration, et le cas échéant, les instants d'échantillonnage, d'un temps $(\Delta\Phi/2\pi Q)LT_1$, ce avec une périodicité $LT_1$.

Selon une seconde variante, les déphasages peuvent être accumulés sur une pluralité $n_T$ de périodes de durée $LT_1$, soit $\Delta\Phi = \sum_{n=0}^{n_T-1} \Delta\phi_n$. Le glissement temporel au bout d'un temps $n_T LT_1$ s'en déduit comme précédemment :

$$\Delta t = \left(-\Delta\Phi/2\pi Q\right) L T_1 \qquad (26)$$

le glissement temporel étant déterminé de manière univoque si $|\delta| < \dfrac{1}{4LQ}$.

Comme dans la première variante, les moyens de contrôle, 290, décalent le début des fenêtres d'intégration et, corrélativement, des instants d'échantillonnage, en fonction du déphasage déterminé par le détecteur 280. Le décalage temporel est appliqué par lesdits moyens de contrôle avec une périodicité $n_T L T_1$.

Alternativement, comme dans le premier mode de réalisation, le glissement temporel pourra être cumulé jusqu'à ce qu'il atteigne une période d'échantillonnage $T_w$, les fenêtres d'intégration étant alors décalées de cette période.

La synchronisation initiale du récepteur peut être obtenue à l'aide d'une séquence pilote.

Une fois le récepteur synchronisé à l'aide de la séquence pilote, le récepteur peut continuer à corriger toute dérive temporelle par recalage tous les intervalles $LT_1$, ou $n_T L T_1$, comme expliqué plus haut.

On comprend qu'ainsi le récepteur reste calé en permanence sur les périodes symboles du signal reçu, les échantillons en sortie de l'étage d'échantillonnage, ou lorsque celui-ci est suivi d'un étage de corrélation, les résultats de corrélation, peuvent être alors traités pour estimer les symboles de modulation $a_m^{(i)}$.

Selon une variante du second mode de réalisation, le signal transmis est modulé au moyen de symboles appartenant à un alphabet PPM (*Pulse Position Modulation*). Si l'on utilise un codage d'émetteur le signal transmis est donné par l'expression (6) et, pour simplifier la présentation, en l'absence d'un tel codage :

$$s_{Tx}(t) = \sum_{i=0}^{N-1} p\left(t - iT_c - m^{(i)}\varepsilon\right) \cos\left(2\pi f_0\left(t - iT_c - m^{(i)}\varepsilon\right) + \varphi_0\right) \qquad (27)$$

Si l'alphabet de modulation est 2-PPM, on choisit de préférence $\varepsilon = \dfrac{T_c}{2}$ et $m \in \{0,1\}$. Par exemple, une valeur de bit égale à 0 sera codée par la position 0 et une valeur de bit égale à 1 sera codée par la position $\dfrac{T_c}{2}$, autrement dit, un bit égal à 0 se traduira par une impulsion dans la première partie de la période et un bit égal à 1 se traduira par une impulsion dans la seconde partie de la période.

Le signal reçu par le récepteur sera alors, en supposant toujours que le canal de transmission est AWGN :

$$r(t) = \sum_{i=0}^{N-1} p\left(t - iT_c - m^{(i)}\frac{T_c}{2}\right) \exp\left(2\pi j(f_0 - f_1)t - j\pi m^{(i)} T_c + j\left(\varphi_0 - \varphi_1\right)\right) + n_1(t) \qquad (28)$$

En détectant l'énergie du signal reçu, on peut déterminer si une impulsion est présente dans la première ou la seconde partie de la période, et estimer $m^{(i)}$. Le glissement de phase entre deux échantillons consécutifs peut alors être estimé à $2\pi$ près :

$$\Delta\phi = -2\pi Q L^* \delta \quad [\pi] \qquad (29)$$

où $L^*$ vaut :

- 0.5 si les échantillons consécutifs correspondent à une séquence 10 ;
- 1 si les échantillons consécutifs correspondent à une séquence 00 ou 11 ;
- 1.5 si les échantillons consécutifs correspondent à une séquence 01.

Le décalage temporel des fenêtres temporelles d'intégration est alors effectué comme décrit précédemment.

**Revendications**

1. Récepteur destiné à recevoir un signal UWB impulsionnel transmettant des symboles avec une première période, modulé par une fréquence porteuse $f_0$, ledit récepteur étant **caractérisé en ce qu'**il comprend :

- un mélangeur en quadrature (240) pour translater en bande de base ledit signal UWB impulsionnel, à partir du signal d'un oscillateur local (245) de fréquence $f_1$ égale, à un offset fréquentiel près, à ladite fréquence porteuse ;
- un étage d'intégration (260) du signal ainsi translaté en bande de base, pendant des fenêtres temporelles successives se répétant avec une seconde période, la première période étant égale, à un offset temporel près, à un multiple de la seconde période ;
- un étage d'échantillonnage (270) pour échantillonner le signal ainsi intégré, un échantillon représentant le résultat d'intégration du signal translaté sur la seconde période ;
- un estimateur de phase (280) pour estimer le déphasage entre deux échantillons du signal intégré, séparés par ledit multiple de la seconde période ;
- des moyens de contrôle (290) appliquant un décalage temporel aux fenêtres temporelles de l'étage d'intégration en fonction du décalage de phase précédemment estimé.

2. Récepteur selon la revendication 1, **caractérisé en ce qu'**il comprend en amont du mélangeur en quadrature un filtre RF (220) suivi d'un amplificateur bas bruit (230).

3. Récepteur selon la revendication 1 ou 2, **caractérisé en ce que** le mélangeur en quadrature est suivi d'un étage de filtrage passe-bas (250) en amont de l'étage d'intégration.

4. Récepteur selon l'une des revendications précédentes, caractérisé en ce le signal impulsionnel comprend une impulsion se répétant avec la première période $T_c$ et que les fenêtres d'intégration se répètent avec une seconde période $T_w$, sensiblement inférieure à $T_c$, l'estimateur de phase estimant ledit déphasage, $\Delta\phi$, entre deux échantillons du signal intégré, séparés par un intervalle de temps $T_1 = qT_w$, où $q$ est un nombre entier, l'écart $T_1 - T_c$ définissant ledit offset temporel.

5. Récepteur selon la revendication 4, **caractérisé en ce que** les moyens de contrôle appliquent aux fenêtres d'intégration un décalage temporel $-\delta t = (\Delta\phi/2\pi Q)T_1$ où Q est un nombre entier égal au produit de l'intervalle de temps $T_1$ par la fréquence $f_1$ de l'oscillateur local, le décalage temporel étant appliqué avec une périodicité $T_1$.

6. Récepteur selon la revendication 4, **caractérisé en ce que** les moyens de contrôle accumulent les déphasages fournis par ledit estimateur de phase pour une pluralité $n_T$ des dits intervalles de temps, successifs, pour obtenir un déphasage cumulé $\Delta\Phi$, et appliquent aux fenêtres d'intégration un décalage temporel $-\Delta t = (\Delta\Phi/2\pi Q)T_1$, où Q est un nombre entier égal au produit de l'intervalle de temps $T_1$ par la fréquence $f_1$ de l'oscillateur local, le décalage temporel étant appliqué avec une périodicité $n_T T_1$.

7. Récepteur selon la revendication 4, **caractérisé en ce que** les moyens de contrôle accumulent les déphasages fournis par ledit estimateur de phase pour une pluralité des dits intervalles de temps, successifs, pour obtenir un déphasage cumulé $\Delta\Phi$, jusqu'à ce que le décalage temporel $-\Delta t = (\Delta\Phi/2\pi Q)T_1$ corresponde à une valeur égale à ladite seconde période, où Q est un nombre entier égal au produit de l'intervalle de temps $T_1$ par la fréquence $f_1$ de l'oscillateur local, un décalage temporel de cette seconde période étant alors appliqué lorsque cette valeur est atteinte.

8. Récepteur selon l'une des revendications 1 à 3, **caractérisé en ce que** le signal impulsionnel comprend une série de $L$ impulsions séparées d'une période $T_c$, ladite série se répétant avec la première période $LT_c$, chaque série d'impulsions étant codée à l'aide d'une séquence de codage $c_k$ et modulée par un symbole de modulation $a_m^{(i)}$, et que les fenêtres d'intégration se répètent avec une seconde période $T_w$, sensiblement inférieure à $T_c$, l'estimateur de phase estimant ledit déphasage, $\Delta\phi$, entre deux échantillons du signal intégré, séparés par un intervalle de temps $T_1 = qLT_w$, où $q$ est un nombre entier, l'écart $L(T_1 - T_c)$ définissant ledit offset temporel.

9. Récepteur selon la revendication 8, **caractérisé en ce que** les moyens de contrôle appliquent aux fenêtres d'intégration un décalage temporel $-\delta t = (\Delta\phi/2\pi Q)LT_1$ où Q est un nombre entier égal au produit de l'intervalle de temps $T_1$ par la fréquence $f_1$ de l'oscillateur local, le décalage temporel étant appliqué avec une périodicité $LT_1$.

10. Récepteur selon la revendication 8, **caractérisé en ce que** les moyens de contrôle accumulent les déphasages fournis par ledit estimateur de phase pour une pluralité $n_T$ des dits intervalles de temps, successifs, pour obtenir un déphasage cumulé $\Delta\Phi$, et appliquent aux fenêtres d'intégration un décalage temporel $-\Delta t=(\Delta\Phi/2\pi Q)LT_1$, où Q est un nombre entier égal au produit de l'intervalle de temps $T_1$ par la fréquence $f_1$ de l'oscillateur local, le décalage temporel étant appliqué avec une périodicité $n_T LT_1$.

11. Récepteur selon la revendication 8, **caractérisé en ce que** les moyens de contrôle accumulent les déphasages fournis par ledit estimateur de phase pour une pluralité des dits intervalles de temps, successifs, pour obtenir un déphasage cumulé $\Delta\Phi$, jusqu'à ce que le décalage temporel $-\Delta t=(\Delta\Phi/2\pi Q)LT_1$ corresponde à une valeur égale à ladite seconde période, où Q est un nombre entier égal au produit de l'intervalle de temps $T_1$ par la fréquence $f_1$ de l'oscillateur local, un décalage temporel de cette seconde période étant alors appliqué lorsque cette valeur est atteinte.

12. Méthode de réception d'un signal UWB impulsionnel transmettant des symboles avec une première période, modulé par une fréquence porteuse $f_0$, ladite méthode comportant les étapes suivantes :

   - un mélange en quadrature pour translater en bande de base ledit signal UWB impulsionnel, à partir du signal d'un oscillateur local de fréquence $f_1$ égale, à un offset fréquentiel près, à ladite fréquence porteuse ;
   - une intégration du signal ainsi translaté en bande de base, pendant des fenêtres temporelles successives se répétant avec une seconde période, la première période étant égale, à un offset temporel près, à un multiple de la seconde période ;
   - un échantillonnage du signal ainsi intégré, un échantillon représentant le résultat d'intégration du signal translaté sur la seconde période ;
   - une estimation de phase pour estimer le déphasage entre deux échantillons du signal intégré, séparés par ledit multiple de la seconde période ;
   - une étape d'application d'un décalage temporel aux fenêtres temporelles de l'étage d'intégration en fonction du décalage de phase précédemment estimé.

13. Méthode de réception selon la revendication 12, **caractérisée en ce que** le signal impulsionnel comprend une impulsion se répétant avec la première période $T_c$ et que les fenêtres d'intégration se répètent avec une seconde période $T_w$, sensiblement inférieure à $T_c$, l'estimation de phase estimant ledit déphasage, $\Delta\phi$, entre deux échantillons du signal intégré, séparés par un intervalle de temps $T_1 = qT_w$, où $q$ est un nombre entier, l'écart $T_1$-$T_c$ définissant ledit offset temporel.

14. Méthode de réception selon la revendication 13, **caractérisée en ce que** le décalage temporel est obtenu par -$\delta t=(\Delta\phi/2\pi Q)T_1$ où Q est un nombre entier égal au produit de l'intervalle de temps $T_1$ par la fréquence $f_1$ de l'oscillateur local, le décalage temporel étant appliqué avec une périodicité $T_1$.

15. Méthode de réception selon la revendication 13, **caractérisée en ce que** l'on accumule, pour une pluralité $n_T$ des dits intervalles de temps successifs, les déphasages fournis par ladite estimation de phase, pour obtenir un déphasage cumulé $\Delta\Phi$, et l'on applique aux fenêtres d'intégration un décalage temporel $-\Delta t=(\Delta\Phi/2\pi Q)T_1$, où Q est un nombre entier égal au produit de l'intervalle de temps $T_1$ par la fréquence $f_1$ de l'oscillateur local, le décalage temporel étant appliqué avec une périodicité $n_T T_1$.

16. Méthode de réception selon la revendication 13, **caractérisée en ce que** l'on accumule, pour une pluralité des dits intervalles de temps successifs, les déphasages fournis par ladite estimation de phase, pour obtenir un déphasage cumulé $\Delta\Phi$, jusqu'à ce que le décalage temporel $-\Delta t=(\Delta\Phi/2\pi Q)T_1$ corresponde à une valeur égale à ladite seconde période, où Q est un nombre entier égal au produit de l'intervalle de temps $T_1$ par la fréquence $f_1$ de l'oscillateur local, un décalage temporel de cette seconde période étant alors appliqué lorsque cette valeur est atteinte.

17. Méthode de réception selon la revendication 12, **caractérisée en ce que** le signal impulsionnel comprend une série de $L$ impulsions séparées d'une période $T_c$, ladite série se répétant avec la première période $LT_c$, chaque série d'impulsions étant codée à l'aide d'une séquence de codage $c_k$ et modulée par un symbole de modulation $a_m^{(i)}$, et que les fenêtres d'intégration se répètent avec une seconde période $T_w$, sensiblement inférieure à $T_c$, l'estimation de phase estimant ledit déphasage, $\Delta\phi$, entre deux échantillons du signal intégré, séparés par un intervalle de temps $T_1=qLT_w$, où $q$ est un nombre entier, l'écart $L(T_1$-$T_c)$ définissant ledit offset temporel.

18. Méthode de réception selon la revendication 17, **caractérisée en ce que** l'on applique aux fenêtres d'intégration un décalage temporel $-\delta t=(\Delta\phi/2\pi Q)LT_1$ où $Q$ est un nombre entier égal au produit de l'intervalle de temps $T_1$ par la fréquence $f_1$ de l'oscillateur local, le décalage temporel étant appliqué avec une périodicité $LT_1$.

**Patentansprüche**

1. Empfänger zum Empfangen eines UWB-Pulssignals, das Symbole mit einer ersten Periode überträgt und das mit einer Trägerfrequenz $f_0$ moduliert ist, wobei der Empfänger **dadurch gekennzeichnet ist, dass** er umfasst:

- einen Quadraturmischer (240) zum Verschieben des UWB-Pulssignals ins Basisband ausgehend vom Signal eines Lokaloszillators (245) mit einer Frequenz $f_1$, die bis auf einen Frequenzoffset gleich der Trägerfrequenz ist;
- eine Stufe (260) zur Integration des derart ins Basisband verschobenen Signals während aufeinanderfolgenden Zeitfenstern, die sich mit einer zweiten Periode wiederholen, wobei die erste Periode bis auf einen Zeitoffset gleich einem Vielfachen der zweiten Periode ist;
- eine Abtaststufe (270) zum Abtasten des derart integrierten Signals, wobei eine Abtastprobe das Ergebnis der Integration des verschobenen Signals über die zweite Periode repräsentiert;
- einen Phasenabschätzer (280) zum Abschätzen der Phasenverschiebung zwischen zwei Abtastproben des integrierten Signals, die um das Vielfache der zweiten Periode separiert sind;
- Steuermittel (290), die einen zeitlichen Versatz auf die Zeitfenster der Integrationsstufe als Funktion der vorher abgeschätzten Phasenverschiebung anwenden.

2. Empfänger nach Anspruch 1, **dadurch gekennzeichnet, dass** er stromaufwärts des Quadraturmischers ein RF-Filter (220) umfasst, gefolgt von einem rauscharmen Verstärker (230).

3. Empfänger nach Anspruch 1 oder 2, **dadurch gekennzeichnet, dass** auf den Quadraturmischer eine Tiefpass-Filterstufe (250) stromaufwärts der Integrationsstufe folgt.

4. Empfänger nach einem der vorhergehenden Ansprüche, **dadurch gekennzeichnet, dass** das Pulssignal einen Puls umfasst, der sich mit der ersten Periode $T_c$ wiederholt, und dass sich die Integrationsfenster mit einer zweiten Periode $T_w$ wiederholen, die wesentlich kleiner als $T_c$ ist, wobei der Phasenabschätzer die Phasenverschiebung $\Delta\phi$ zwischen zwei Abtastproben des integrierten Signals abschätzt, die durch ein Zeitintervall $T_1= qT_w$ separiert sind, wobei $q$ eine ganze Zahl ist, wobei der Abstand $T_1$-$T_c$ den Zeitoffset definiert.

5. Empfänger nach Anspruch 4, **dadurch gekennzeichnet, dass** die Steuermittel auf die Integrationsfenster eine zeitliche Verschiebung $-\delta t = (\Delta\phi/2\pi Q)T_1$ anwenden, wobei $Q$ eine ganze Zahl gleich dem Produkt des Zeitintervalls $T_1$ mit der Frequenz $f_1$ des Lokaloszillators ist, wobei die zeitliche Verschiebung mit einer Periodizität $T_1$ angewandt wird.

6. Empfänger nach Anspruch 4, **dadurch gekennzeichnet, dass** die Steuermittel die Phasenverschiebungen, die von dem Phasenabschätzer geliefert werden, für eine Mehrzahl $n_T$ der Zeitintervalle sukzessive ansammeln, um eine kumulierte Phasenverschiebung $\Delta\Phi$ zu erhalten, und auf die Integrationsfenster eine zeitliche Verschiebung $-\Delta t = (\Delta\Phi/2\pi Q)T_1$ anwenden, wobei $Q$ eine ganze Zahl gleich dem Produkt des Zeitintervalls $T_1$ mit der Frequenz $f_1$ des Lokaloszillators ist, wobei die zeitliche Verschiebung mit einer Periodizität $n_T T_1$ angewandt wird.

7. Empfänger nach Anspruch 4, **dadurch gekennzeichnet, dass** die Steuermittel die Phasenverschiebungen, die von dem Phasenabschätzer geliefert werden, für eine Mehrzahl der Zeitintervalle sukzessive ansammeln, um eine kumulierte Phasenverschiebung $\Delta\Phi$ zu erhalten, bis die zeitliche Verschiebung $-\Delta t = (\Delta\Phi/2\pi Q)T_1$ einem Wert gleich der zweiten Periode entspricht, wobei $Q$ eine ganze Zahl gleich dem Produkt des Zeitintervalls $T_1$ mit der Frequenz $f_1$ des Lokaloszillators ist, wobei eine zeitliche Verschiebung dieser zweiten Periode dann angewandt wird, wenn dieser Wert erreicht wird.

8. Empfänger nach einem der Ansprüche 1 bis 3, **dadurch gekennzeichnet, dass** das Pulssignal eine Serie von $L$ Pulsen umfasst, die um eine Periode $T_c$ separiert sind, wobei sich die Serie mit der ersten Periode $LT_c$ wiederholt, wobei jede Serie von Pulsen mit Hilfe einer Codiersequenz $c_k$ codiert ist und durch ein Modulationssymbol $a_m^{(i)}$ moduliert ist, und dass die Integrationsfenster sich mit einer zweiten *Periode* $T_w$ wiederholen, die wesentlich kleiner ist als $T_c$, wobei der Phasenabschätzer die Phasenverschiebung $\Delta\phi$ zwischen zwei Abtastproben des integrierten Signals abschätzt, die um ein Zeitintervall $T_1 = qLT_w$ separiert sind, wobei $q$ eine ganze Zahl ist, wobei der Abstand $L$ $(T_1 - T_c)$ den Zeitoffset definiert.

9. Empfänger nach Anspruch 8, **dadurch gekennzeichnet, dass** die Steuermittel auf die Integrationsfenster eine zeitliche Verschiebung $-\delta t = (\Delta\phi/2\pi Q) \, LT_1$ anwenden, wobei $Q$ eine ganze Zahl gleich dem Produkt des Zeitintervalls $T_1$ mit der Frequenz $f_1$ des Lokaloszillators ist, wobei die zeitliche Verschiebung mit einer Periodizität $LT_1$ angewandt wird.

10. Empfänger nach Anspruch 8, **dadurch gekennzeichnet, dass** die Steuermittel die Phasenverschiebungen, die durch den Phasenabschätzer geliefert werden, für eine Mehrzahl $n_T$ der Zeitintervalle sukzessive ansammeln, um eine kumulierte Phasenverschiebung $\Delta\Phi$ zu erhalten, und auf die Integrationsfenster eine zeitliche Verschiebung $-\Delta t = (\Delta\Phi/2\pi Q) \, LT_1$ anwenden, wobei $Q$ eine ganze Zahl gleich dem Produkt des Zeitintervalls $T_1$ mit der Frequenz $f_1$ des Lokaloszillators ist, wobei die zeitliche Verschiebung mit einer Periodizität $n_T LT_1$ angewandt wird.

11. Empfänger nach Anspruch 8, **dadurch gekennzeichnet, dass** die Steuermittel die Phasenverschiebungen, die von dem Phasenabschätzer geliefert werden, für eine Mehrzahl der Zeitintervalle sukzessive ansammeln, um eine kumulierte Phasenverschiebung $\Delta\Phi$ zu erhalten, bis die zeitliche Verschiebung $-\Delta t = (\Delta\Phi/2\pi Q) \, LT_1$ einem Wert gleich der zweiten Periode entspricht, wobei $Q$ eine ganze Zahl gleich dem Produkt des Zeitintervalls $T_1$ mit der Frequenz $f_1$ des Lokaloszillators ist, wobei eine zeitliche Verschiebung dieser zweiten Periode dann angewandt wird, wenn dieser Wert erreicht wird.

12. Verfahren zum Empfangen eines UWB-Pulssignals, das Symbole mit einer ersten Periode überträgt, und das mit einer Trägerfrequenz $f_0$ moduliert ist, wobei das Verfahren die folgenden Schritte umfasst:

    - eine Quadraturmischung, um das UWB-Pulssignal ins Basisband zu verschieben, ausgehend vom Signal eines Lokaloszillators mit einer Frequenz $f_1$, die bis auf einen Frequenzoffset gleich der Trägerfrequenz ist;
    - eine Integration des derart ins Basisband verschobenen Signals während sukzessiven Zeitfenstern, die sich mit einer zweiten Periode wiederholen, wobei die erste Periode bis auf einen Zeitoffset gleich einem Vielfachen der zweiten Periode ist;
    - eine Abtastung des derart integrierten Signals, wobei eine Abtastprobe das Ergebnis der Integration des verschobenen Signals über die zweite Periode repräsentiert;
    - eine Phasenabschätzung zum Abschätzen der Phasenverschiebung zwischen zwei Abtastproben des integrierten Signals, die um das Vielfache der zweiten Periode separiert sind;
    - einen Schritt des Anwendens einer zeitlichen Verschiebung auf die Zeitfenster der Integrationsstufe als Funktion der zuvor abgeschätzten Phasenverschiebung.

13. Empfangsverfahren nach Anspruch 12, **dadurch gekennzeichnet, dass** das Pulssignal einen Puls umfasst, der sich mit der ersten Periode $T_c$ wiederholt, und dass sich die Integrationsfenster mit einer zweiten Periode $T_w$ wiederholen, die wesentlich kleiner als $T_c$ ist, wobei die Phasenabschätzung die Phasenverschiebung $\Delta\phi$ zwischen zwei Abtastproben des integrierten Signals abschätzt, die durch ein Zeitintervall $T_1 = qT_w$ separiert sind, wobei $q$ eine ganze Zahl ist, wobei der Abstand $T_1 - T_c$ den Zeitoffset definiert.

14. Empfangsverfahren nach Anspruch 13, **dadurch gekennzeichnet, dass** die zeitliche Verschiebung erhalten wird durch $-\delta t = (\Delta\phi/2\pi Q) \, T_1$, wobei $Q$ eine ganze Zahl gleich dem Produkt des Zeitintervalls $T_1$ mit der Frequenz $f_1$ des Lokaloszillators ist, wobei die zeitliche Verschiebung mit einer Periodizität $T_1$ angewandt wird.

15. Empfangsverfahren nach Anspruch 13, **dadurch gekennzeichnet, dass** man für eine Mehrzahl $n_T$ der Zeitintervalle sukzessive die Phasenverschiebungen ansammelt, die durch die Phasenabschätzung geliefert werden, um eine kumulierte Phasenverschiebung $\Delta\Phi$ zu erhalten, und dass man auf die Integrationsfenster eine zeitliche Verschiebung $-\Delta t = (\Delta\Phi/2\pi Q) \, T_1$ anwendet, wobei $Q$ eine ganze Zahl gleich dem Produkt des Zeitintervalls $T_1$ mit der Frequenz $f_1$ des Lokaloszillators ist, wobei die zeitliche Verschiebung mit einer Periodizität $n_T T_1$ angewandt wird.

16. Empfangsverfahren nach Anspruch 13, **dadurch gekennzeichnet, dass** man für eine Mehrzahl der Zeitintervalle sukzessive die Phasenverschiebungen ansammelt, die von der Phasenabschätzung geliefert werden, um eine kumulierte Phasenverschiebung $\Delta\Phi$ zu erhalten, bis die zeitliche Verschiebung $-\Delta t = (\Delta\Phi/2\pi Q) \, T_1$ einem Wert gleich der zweiten Periode entspricht, wobei $Q$ eine ganze Zahl gleich dem Produkt des Zeitintervalls $T_1$ mit der Frequenz

$f_1$ des Lokaloszillators ist, wobei eine zeitliche Verschiebung dieser zweiten Periode dann angewandt wird, wenn dieser Wert erreicht wird.

17. Empfangsverfahren nach Anspruch 12, **dadurch gekennzeichnet, dass** das Pulssignal eine Serie von $L$ Pulsen umfasst, die um eine Periode $T_c$ separiert sind, wobei sich die Serie mit der ersten Periode $LT_c$ wiederholt, wobei jede Serie von Pulsen mit Hilfe einer Codiersequenz $c_k$ codiert ist und durch ein Modulationssymbol $a_m^{(i)}$ moduliert ist, und dass die Integrationsfenster sich mit einer zweiten Periode $T_w$ wiederholen, die wesentlich kleiner ist als $T_c$, wobei die Phasenabschätzung die Phasenverschiebung $\Delta\phi$ zwischen zwei Abtastproben des integrierten Signals abschätzt, die um ein Zeitintervall $T_1=qLT_w$ separiert sind, wobei $q$ eine ganze Zahl ist, wobei der Abstand $L(T_1 - T_c)$ den Zeitoffset definiert.

18. Empfangsverfahren nach Anspruch 17, **dadurch gekennzeichnet, dass** man auf die Integrationsfenster eine zeitliche Verschiebung $-\delta t = (\Delta\phi/2\pi Q) LT_1$ anwendet, wobei $Q$ eine ganze Zahl gleich dem Produkt des Zeitintervalls $T_1$ mit der Frequenz $f_1$ des Lokaloszillators ist, wobei die zeitliche Verschiebung mit einer Periodizität $LT_1$ angewandt wird.

## Claims

1. A receiver for receiving a pulsed UWB signal transmitting symbols with a first period, modulated by a carrier frequency $f_0$, said receiver being **characterized in that** it comprises:

   - a quadrature mixer (240) for translating in baseband said pulsed UWB signal, from the signal of a local oscillator (245) of a frequency $f_1$ equal to, within a frequency offset, to said carrier frequency;
   - an integration stage (260) for integrating the signal thus translated in baseband, during successive time windows being repeated with a second period, the first period being equal, within a time offset, to a multiple of the second period;
   - a sampling stage (270) for sampling the signal thus integrated, a sample representing the integration result of the signal translated on the second period;
   - a phase estimator (280) for estimating the phase shift between two samples of the integrated signal, which are separated by said multiple of the second period;
   - control means (290) applying a time offset to the time windows of the integration stage as a function of the phase offset previously estimated.

2. The receiver according to claim 1, **characterized in that** it comprises upstream of the quadrature mixer an RF filter (220) followed by a low noise amplifier (230).

3. The receiver according to claim 1 or 2, **characterized in that** the quadrature mixer is followed by a low-pass filtering stage (250) upstream of the integration stage.

4. The receiver according to one of the preceding claims, **characterized in that** the pulsed signal comprises a pulse being repeated with the first period $T_c$ and **in that** the integration windows are repeated with a second period $T_w$, substantially lower than $T_c$, the phase estimator estimating said phase shift, $\Delta\phi$, between two samples of the integrated signal, which are separated by a time interval $T_1 = qT_w$, where $q$ is an integer, the deviation $T_1 - T_c$ defining said time offset.

5. The receiver according to claim 4, **characterized in that** the control means apply to the integration windows a time offset $-\delta t = (\Delta\phi/2\pi Q)T_1$ where $Q$ is an integer equal to the product of the time interval $T_1$ by the frequency $f_1$ of the local oscillator, the time offset being applied with a periodicity $T_1$.

6. The receiver according to claim 4, **characterized in that** the control means accumulate the phase shifts provided by said phase estimator for a plurality $n_T$ of said successive time intervals, to obtain a cumulative phase shift $\Delta\Phi$, and apply to the integration windows a time offset $-\Delta t = (\Delta\Phi/2\pi Q)T_1$, where $Q$ is an integer equal to the product of the time interval $T_1$ by the frequency $f_1$ of the local oscillator, the time offset being applied with a periodicity $n_T T_1$.

7. The receiver according to claim 4, **characterized in that** the control means accumulate the phase shifts provided by said phase estimator for a plurality of said successive time intervals, to obtain a cumulative phase shift $\Delta\Phi$, until the time offset $-\Delta t = (\Delta\Phi/2\pi Q)T_1$ corresponds to a value equal to said second period, where $Q$ is an integer equal to the product of the time interval $T_1$ by the frequency $f_1$ of the local oscillator, a time offset of this second period being then applied when this value is reached.

8. The receiver according to one of claims 1 to 3, **characterized in that** the pulsed signal comprises a series of $L$ pulses separated by a period $T_c$, said series being repeated with the first period $LT_c$, each series of pulses being coded using a coding sequence $c_k$ and modulated by a modulation symbol $a_m^{(i)}$, and that the integration windows are repeated with a second period $T_w$, substantially lower than $T_c$, the phase estimator estimating said phase shift, $\Delta\phi$, between two samples of the integrated signal, which are separated by a time interval $T_1 = qLT_w$, where $q$ is an integer, the deviation $L(T_1-T_c)$ defining said time offset.

9. The receiver according to claim 8, **characterized in that** the control means apply to the integration windows a time offset $-\delta t = (\Delta\phi/2\pi Q)LT_1$ where $Q$ is an integer equal to the product of the time interval $T_1$ by the frequency $f_1$ of the local oscillator, the time offset being applied with a periodicity $LT_1$.

10. The receiver according to claim 8, **characterized in that** the control means accumulate the phase shifts provided by said phase estimator for a plurality $n_T$ of said successive time intervals, to obtain a cumulative phase shift $\Delta\Phi$ and apply to the integration windows a time offset $-\Delta t = (\Delta\Phi/2\pi Q)LT_1$, where $Q$ is an integer equal to the product of the time interval $T_1$ by the frequency $f_1$ of the local oscillator, the time offset being applied with a periodicity $n_TLT_1$.

11. The receiver according to claim 8, **characterized in that** the control means accumulate the phase shifts provided by said phase estimator for a plurality of said successive time intervals, to obtain a cumulative phase shift $\Delta\Phi$, until the time offset $-\Delta t = (\Delta\Phi/2\pi Q)LT_1$ corresponds to a value equal to said second period, where $Q$ is an integer equal to the product of the time interval $T_1$ by the frequency $f_1$ of the local oscillator, a time offset of this second period being then applied when this value is reached.

12. A method for receiving the pulsed UWB signal transmitting symbols with a first period, modulated by a carrier frequency $f_0$, said method comprising the following steps of:

   - quadrature mixing for translating in baseband said pulsed UWB signal, from the signal of a local oscillator of a frequency $f_1$ equal, within a frequency offset, to said carrier frequency;
   - integrating the signal thus translated in baseband, for successive time windows being repeated with a second period, the first period being equal, within a time offset, to a multiple of the second period;
   - sampling the signal thus integrated, a sample representing the integration result of the signal translated on the second period;
   - phase estimating for estimating the phase shift between two samples of the integrated signal, which are separated by said multiple of the second period;
   - a step of applying a time offset to the time windows of the integration stage as a function of the phase offset previously estimated.

13. The reception method according to claim 12, **characterized in that** the pulsed signal comprises a pulse being repeated with the first period $T_c$ and **in that** the integration windows are repeated with a second period $T_w$, substantially lower than $T_c$, the phase estimation estimating said phase shift, $\Delta\phi$, between two samples of the integrated signal, which are separated by a time interval $T_1 = qT_w$, where $q$ is an integer, the deviation $T_1 - T_c$ defining said time offset.

14. The reception method according to claim 13, **characterized in that** the time offset is obtained by $-\delta t = (\Delta\phi/2\pi Q)T1$ where $Q$ is an integer equal to the product of the time interval $T_1$ by the frequency $f_1$ of the local oscillator, the time offset being applied with a periodicity $T_1$.

15. The reception method according to claim 13, **characterized in that**, for a plurality $n_T$ of said successive time intervals, the phase shifts provided by said phase estimation are accumulated, to obtain a cumulative phase shift $\Delta\Phi$, and to the integration windows is applied a time offset $-\Delta t = (\Delta\Phi/2\pi Q)T_1$, where $Q$ is an integer equal to the product of the time interval $T_1$ by the frequency $f_1$ of the local oscillator, the time offset being applied with a periodicity $n_TT_1$.

16. The reception method according to claim 13, **characterized in that**, for a plurality of said successive time intervals, the phase shifts provided by said phase estimation are accumulated, to obtain a cumulative phase shift $\Delta\Phi$, until the time offset $-\Delta t = (\Delta\Phi/2\pi Q)T_1$ corresponds to a value equal to said second period, where $Q$ is an integer equal to the product of the time interval $T_1$ by the frequency $f_1$ of the local oscillator, a time offset of this second period being then applied when this value is reached.

17. The reception method according to claim 12, **characterized in that** the pulsed signal comprises a series of $L$ pulses separated by a period $T_c$, said series being repeated with the first period $LT_c$, each series of pulses being coded using a coding sequence $c_k$ and modulated by a modulation symbol $a_m^{(i)}$, and **in that** the integration windows are repeated with a second period $T_w$, substantially lower than $T_c$, the phase estimation estimating said phase shift, $\Delta\phi$, between two samples of the integrated signal, which are separated by a time interval $T_1 = qLT_w$, where $q$ is an integer, the deviation $L(T_1 - T_c)$ defining said time offset.

18. The reception method according to claim 17, **characterized in that** to the integration windows is applied a time offset $-\delta t = (\Delta\phi/2\pi Q)LT_1$ where $Q$ is an integer equal to the product of the time interval $T_1$ by the frequency $f_1$ of the local oscillator, the time offset being applied with a periodicity $LT_1$.

EP 2 909 944 B1

$$T_f = LT_c$$

$p(t)$

$T_c$

**Fig. 1A**

$T_f$

$a_m^{(0)} = +1$          $a_m^{(1)} = +1$          $a_m^{(2)} = -1$

**Fig. 1B**

**Fig. 2A**

**Fig. 2B**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100142596 A

**Littérature non-brevet citée dans la description**

- **L'ARTICLE DE LI HUANG et al.** Timing tracking algorithms for impulse radio (IR) based ultra-wideband (UWB) systems. *Proc. of WICOM 2007,* Septembre 2007, 570-573